# EUROPEAN PATENT APPLICATION

(11) **EP 1 005 207 A2**
(43) Date of publication of application: **31.05.2000**
(21) Application number: 99309096.8
(22) Date of filing: 16.11.1999
(51) Int. Cl.: H04M 1/03

(54) **Encapsulated communication device**

(30) Priority: 23.11.1998 US 197619
(71) Applicant: LUCENT TECHNOLOGIES INC., Murray Hill, New Jersey 07974-0636 (US)
(72) Inventor: Decker, Robert Leroy, Parisippany, New Jersey 07054 (US); Weld, John David, Succasunna, New Jersey 07876 (US)
(74) Representative: Johnston, Kenneth Graham

(57) **Abstract**

Reaction injection molding is used to provide a communications device, e.g., a telephone handset, having a body that contains internal electronics and polymeric material that substantially fill the entire volume of the body. The body thus consists of the internal electronics surrounded or encapsulated by a continuous mass of the polymeric material.

## Description

### BACKGROUND OF THE INVENTION

### Field of the Invention

The invention relates to telecommunications devices, e.g., telephone handsets and cellular phones, having polymeric housings formed by molding techniques.

### Discussion of the Related Art

Conventional personal electronic products, e.g., telephone handsets and cellular phones, generally utilize two or more injection molded polymeric housings that protect and support internal electronics, as well as provide styling. The housings are generally substantially hollow, with numerous bosses, flanges, tabs, and/or pockets provided to mount and support such internal electronics during assembly. Such assembly sometimes requires multiple steps for sequential insertion and connection of various components, and the housings then must be attached to each other to form the final product. See, e.g., U.S. Patent No. 4,984,268. These assembly techniques have been useful in providing relatively light and robust assemblies at a reasonable cost. However, alternatives which offer more robust assemblies, but at even lower cost, are always desirable.

### SUMMARY OF THE INVENTION

The invention provides a useful, cost-effective alternative for fabricating articles such as telephone handsets and cellular phones with improved robustness. Specifically, a consolidated polymeric body is formed by simply placing internal electronics into a mold cavity and flowing a liquid polymeric molding material into the cavity using reaction injection molding (RIM). In the resulting body, solidified polymeric material substantially encapsulates the internal electronics, such that the internal electronics and the polymeric material substantially fill the entire volume of the body. Reaction injection molding is discussed generally in C.W. Macosko, RIM, Fundamentals of Reaction Injection Molding, Oxford Press (1989), the disclosure of which is hereby incorporated by reference.

(Polymeric material refers to the solidified material that results from the RIM process. Substantially fill the entire volume of the body indicates that at least 99 vol.% of the space within and including the exterior surface of the body is made up of the electronics and the polymeric material (including pores or cells within the polymeric material). Internal electronics includes the electronics, e.g., handset microphone, as well as any supporting pieces for the electronics, e.g., wires, plastic supports, or actuating parts, e.g., buttons or dials. It is possible for portions of the internal electronics to be located at the exterior surface of the body, such as a connector or liquid crystal display.)

The RIM process involves introduction into a mold of two chemical components that react to form the polymeric material, which is a polyurethane. RIM offers several advantages over more traditional molding techniques such as injection molding or transfer molding. Specifically, RIM offers relatively easy fabrication of large parts, allows for wall thickness variations, provides encapsulation of internal parts or electronics, allows desirable surface reproducibility and in-mold paint finishing, and also provides desirable dimensional stability, solvent resistance, and weatherability. And RIM is able to provide these features using less expensive molds, less energy, and lower tonnage presses, compared to conventional injection molding of thermoplastics.

### BRIEF DESCRIPTION OF THE DRAWINGS

Fig. 1 shows the basic features of the reaction injection molding process.

Fig. 2 shows a basic mold suitable for reaction injection molding a telephone handset.

Fig. 3 shows a schematic representation of a two-piece shell useful for providing a single unit of internal electronics to be placed into a reaction injection mold.

### DETAILED DESCRIPTION OF THE INVENTION

Reaction injection molding is a plastic molding process designed for two-component polyurethanes. Two liquid components that chemically react to form the polyurethane are mixed just prior to flow into the mold. The two liquid components are an isocyanate and a polyol, and are referred to as the A side and B side components, respectively (in Europe, the isocyanate is the B side and the polyol is the A side). The combination of the two components is referred to as the RIM system. The polyol component of the RIM system generally contains additives such as stabilizers, flow modifiers, catalysts, combustion modifiers, blowing agents, filler, pigments, and/or mold release agents. Such additives provide a variety of characteristics, depending on the particular article being formed. When the two components are mixed, the isocyanate reacts with the hydroxyl of the polyol to form a thermoset polyurethane polymer. This reaction is exothermic, and cooling lines are generally required in the mold to dissipate the heat. Typically, the mold is maintained at about 140 to 160°F , and the temperature of the two components, during reaction, will reach about 200 to 250°F for a few seconds, depending on part thickness. RIM is therefore considered to be a relatively cool molding process. Pressure in the mold cavity is capable of reaching about 70 to about 100 psi.

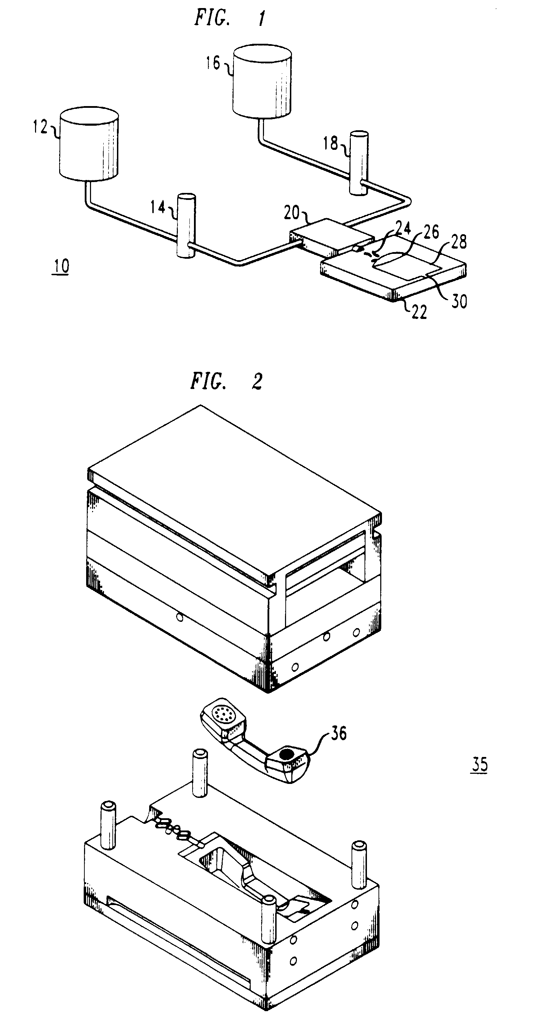

Fig. 1 shows the basic features of a RIM apparatus. (See also C.W. Macosko, RIM, Fundamentals of Reaction Injection Molding, supra.) Pressurized tanks 12, 16 hold the isocyanate and polyol, respectively. Typically, the tanks have a capacity ranging from 30 to 250 gallons. Recirculation pumps and agitators (not shown) maintain a homogeneous blend of each component, and heat exchangers (not shown) maintain each component at a constant temperature. High-pressure metering pumps 14, 18 (or hydraulically driven chemical cylinders) meter the two liquid components into the mix head 20. The mix head 20 contains injector nozzles that impinge the isocyanate and polyol at high velocities to provide a high level of mixing before the components are flowed into the mold 22. Typically, an aftermixer 24 is provided in the mold 22 to promote further mixing. The mold 22 generally contains a dam gate 24, a mold cavity 28 (providing the shape for the molded body), a vent 30, and cooling channels (not shown). Generally, the mold cavities for RIM are made from a high quality tool steel to provide long life and low wear. It is possible to polish and/or chrome plate the cavity surfaces to provide a highly glossed finish on the final product, and such treatments are common where the body will be used in its as-molded condition.

Due to the low, viscosities of the two components, a gravity-influenced mold fill is typical, where the liquid first pools at the bottom of the mold cavity and then fills to the top. Because there is no pressure-induced flow front in the process, it is possible for air to be trapped within the body. To reduce the possibility of trapped air, it is advantageous to locate the vent (or vents) at high points in the mold cavity and locate the gate at a low point. Part design, mold orientation, and fill parameters are also important in reducing the chances of trapping air in the cavity. Typical RIM presses allow for 90° rotation of the mold, to provide a high level of air evacuation for a variety of parts.

A RIM system is generally classified by the degree of rigidity of the resultant polyurethane - rigid or elastomeric. Rigid generally indicates a relatively high flexural modulus and hardness, as well as relatively high thermal resistance, relatively high electrical and acoustic insulation characteristics, and relatively high solvent resistance. Elastomeric generally indicates significant impact strength, as well as desirable toughness and dimensional stability over a wide range of temperatures. Elastomeric RIM polyurethane also exhibits relatively high resistance to corrosion, abrasion, wear, and cuts. There are three types of polyurethane systems, all of which are capable of being formed with either rigid or elastomeric properties - foamed, solid, and structural composite. Foamed polyurethanes use blowing agents to form parts with higher density skin and a lower density, microcellular core (with cells as small as 0.001 inch). This foamed structure provides lightweight yet strong parts. Typical properties for foamed polyurethane are a tensile strength of about 2000 psi (pounds per square inch) to about 4800 psi, a flexural modulus of about 100,000 psi to about 250,000 psi, and a flexural strength of about 3500 psi to about 9000 psi. Solid polyurethanes do not contain blowing agents, thereby exhibiting a homogeneous structure, and offer good physical properties suitable for structural applications, particularly for parts having both thin and thick sections. Typical properties for such solid polyurethanes are a tensile strength of about 5700 psi (pounds per square inch) to about 7000 psi, a flexural modulus of about 200,000 psi to about 290,000 psi, and a flexural strength of about 8700 psi to about 11,000 psi. Structural composite polyurethanes are either foamed or solid polyurethanes containing long fiber reinforcements, which improve mechanical strength and related physical properties.

Other details of the RIM process are known to those skilled in the art.

For a telecommunications device of the invention, rigid foamed polyurethanes are typically used to provide a durable outer skin, but a less dense (and thus lighter) interior. Foamed polyurethanes also allow control of weight and appearance. Performing the RIM process with foamed polyurethane involves only partially filling the mold cavity to a particular volume, referred to as the liquid level or shot size. During reaction, the molding material will expand to completely fill the mold cavity. Thus, the initial liquid level determines (1) the final density of the internal microcellular structure, (2) the skin thickness on the outer surface of the body, and (3) to a limited extent, the color of the finished body (although color is more significantly affected by any added pigment). Thus, the strength, weight and other physical properties are significantly affected by the liquid level. Typical densities for the foamed polyurethane in the invention range from about 15 to about 55 lb/in³. Control samples are easily prepared to determine the appropriate liquid level for a particular molded body.

To provide a desirable finish to the device, the mold cavity surfaces are typically highly polished and/or plated (e.g., with chrome). Also, a mold release agent is typically required to ease ejection of the part from the mold. Such agents are either incorporated into the polyol component of the RIM system or disposed (e.g., sprayed) into the mold cavity. For parts intended for use in their as-molded condition, such as a telephone handset, it is advantageous to add mold release agents directly to the RIM system. Dispensing mold release agents directly into the mold cavity introduces the possibility for remnants of the agent to foul the finish of a subsequent part, and thus requires frequent cleaning of the cavity.

Design of the internal electronics and their placement in the mold cavity should involve consideration of potential interference with the molding process, as well as maintenance of the integrity of the electronics. Typically, it is advantageous to place the electronics into the mold cavity as a single, relatively rigid unit that is able to be easily placed into the mold cavity. It is also possible to place a number of distinct electronics into the cavity, or to place both one or more such units of electronics along with individual electronic devices. It is possible to provide such a single unit by use of support structures that provide some rigidity and partially or fully surround the electronics, such as a plastic tube to contain and/or support wiring or devices, or a molded plastic shell into which the electronics are placed. (Single unit indicates that the electronic devices of the internal electronics are connected and supported not just by wire interconnections, but by passive physical components, e.g., a tube, a shell, a rod, tape, or elastic bands.) Such support structures are also useful for resisting expansion forces and/or preventing or reducing the flow of the low viscosity liquid into gaps or creases in the electronic components (a plastic shell is useful for avoiding such flow). It is possible that further steps will need to be taken to prevent such leakage into the electronics, such as providing a rubber or silicone layer over a portion of the electronics. The single unit of electronics is typically placed onto pins or other supports located within the cavity. Such pins or supports should not significantly affect the usability of the final product, and, in fact, it is possible for pins to provide a desired opening from the exterior of the body to the electronics, e.g., at the mouthpiece or earpiece of a telephone handset.

Once the electronics are placed into the mold cavity, advantageously as a single, relatively rigid unit, reaction injection molding is performed as discussed previously. The resulting body is a consolidated polymeric body having electronics encapsulated therein. The production technique of the invention is generally easier, less complex, and less costly than conventional techniques, but nonetheless offers similar or better physical and mechanical properties (e.g., encapsulation typically offers better shock protection). The process is useful for fabricating a variety of devices, such as telephone handsets, cellular phones, walkie-talkies, and radios.

The invention will be further clarified by the following example, which is intended to be exemplary.

### Example 1

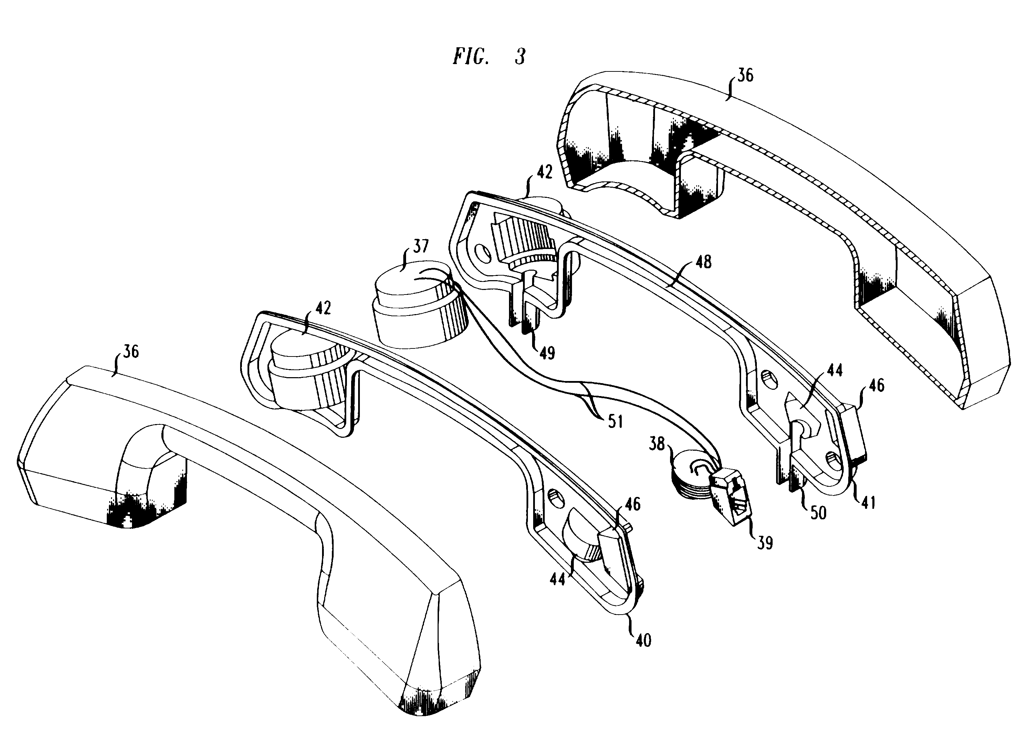

A telephone handset is fabricated by the following process. Two cavity mold halves for the handset are modified for use in a RIM process. The mold halves are formed from high quality tool steel exhibiting a Rockwell C hardness of approximately 60. The surfaces of the mold cavities are finely polished and provided with a chrome plating. A 9.875 × 16 inch D-M-E standard A series mold base is used to mount the cavity inserts, for necessary alignment and to provide necessary gating and venting. The mold halves are then attached to the mold base by conventional methods. A runner and gate are cut into the mold base along the parting surface, and an aftermixer is cut into the mold (see Fig. 1). A fan gate is used to distribute the liquid along the width of the mold cavity, and a 0.007 inch deep vent extending the width of the handset is cut along the parting surface at the opposing end of the mold cavity. A schematic of a suitable mold 35, including a representation of the resulting telephone handset 36, is shown in Fig. 2.

As reflected in Fig. 3, which is an exploded view of a reaction injection molding telephone handset, the handset electronics - receiver 37 (speaker), transmitter 38 (microphone), and connector 39 (jack) - are integrated into a single structure that eases insertion of the electronics into the mold cavity, by use of a two-piece (40, 41) polyvinyl chloride (PVC) shell. (Fig. 3 shows the polymeric portion of the handset 36 in two halves for illustrative purposes only; the handset is molded as a single article, as described herein.) The shell halves 40, 41, when assembled, provide a receiver space 42, a transmitter space 44, and a connector space 46, along with space 48 for connecting wiring 51, such that the electronics are easily placed into the shell to form a single, relatively rigid unit. The shell is formed by a conventional thermoforming technique. Specifically, PVC sheets having a thickness ranging from about 0.010 to about 0.040 inches are heated to about 120 to about 175°F, to soften the material, and then placed over aluminum forms, with vacuum assist, to provide the desired shape. Upon cooling, the PVC maintains the shape of the aluminum forms. The edges of the sheets are trimmed, providing two halves of a sealable, relatively rigid shell into which the electronics are capable of being placed. Other details of PVC thermoforming are apparent to one skilled in the art.

The receiver, transmitter, connector, and wire interconnects are placed into the shell. This single electronics unit is securely mounted in the mold cavity by placing two opposing ends of the shell onto two associated pins present in the cavity. The shell has openings 49, 50 for the pins at the locations of the mouthpiece and earpiece of the handset, these openings providing for an acoustic path in the final product. The RIM mold is then closed.

The polyurethane used to mold the handset is Baydur 730 IBS structural foam polyurethane (available from Bayer Corporation). RIM is performed according to standard techniques. The shape of the handset requires that the mold be oriented such that the handset's long axis is vertical, to reduce air voids. The Baydur 730 IBS does not contain a mold release agent, and an in-mold spray or paste wax is used. The resultant product is a polymeric body having an internal electronics unit encapsulated by the polyurethane.

Other embodiments of the invention will be apparent to those skilled in the art from consideration of the specification and practice of the invention disclosed herein.

## Claims

1. A process for forming a telecommunications device that comprises a polymeric body, comprising the steps of:
providing a mold cavity;
placing internal electronics into the mold cavity;
flowing a reaction injection molding system into the mold cavity containing the internal electronics by a reaction injection molding process;
allowing the reaction injection molding system to solidify into a polymeric material; and
removing the body from the mold cavity, wherein the polymeric material and the internal electronics substantially fill the entire volume of the body.

2. The process of claim 1, wherein the polyol component of the reaction injection molding system comprises at least one additive selected from stabilizers, flow modifiers, catalysts, combustion modifiers, blowing agents, fillers, pigments, and mold release agents.

3. The process of claim 1, wherein the polymeric material is a rigid polyurethane.

4. The process of claim 1, wherein the polymeric material is a foamed polyurethane.

5. The process of claim 1, wherein the internal electronics are placed into the mold cavity as a single unit.

6. The process of claim 5, wherein the single unit further comprises a thermoformed polymer shell in which the internal electronics are located.

7. The process of claim 1, wherein the body is a telephone handset.

8. A telecommunications device comprising a polymeric body that comprises internal electronics and polymeric material, wherein the internal electronics and the polymeric material substantially fill the entire volume of the body.

9. The device of claim 8, wherein the polymeric material is a rigid polyurethane formed by a reaction injection molding process.

10. The device of claim 8, wherein the polymeric material is a foamed polyurethane formed by a reaction injection molding process.

11. The device of claim 8, wherein the body is a telephone handset.

12. The device of claim 8, wherein the internal electronics are present as a single unit.

13. The device of claim 12, wherein the single unit further comprises a thermoformed polymer shell in which the electronics are located.
